# EUROPÄISCHE PATENTSCHRIFT

(11) **EP 3 695 430 B1**
(45) Veröffentlichungstag und Bekanntmachung des Hinweises auf die Patenterteilung: **01.03.2023**
(21) Anmeldenummer: 18833655.6
(22) Anmeldetag: 20.12.2018
(51) Int. Cl.: H01H 11/04

(54) **VERFAHREN ZUM HERSTELLEN EINES KONTAKTBAUTEILS SOWIE KONTAKTBAUTEIL, VAKUUMSCHALTRÖHRE UND SCHALTANLAGE**
METHOD FOR PRODUCING A CONTACT COMPONENT, AND CONTACT COMPONENT, VACUUM INTERRUPTER AND SWITCHGEAR
PROCÉDÉ DE FABRICATION D'UN COMPOSANT DE CONTACT AINSI QUE COMPOSANT DE CONTACT, AMPOULE À VIDE ET INSTALLATION DE COMMUTATION

(30) Priorität: 29.01.2018 DE 102018201301
(43) Veröffentlichungstag der Anmeldung: 19.08.2020
(73) Patentinhaber: Siemens Aktiengesellschaft, 80333 München (DE)
(72) Erfinder: KRÜGER, Ursus, 14089 Berlin (DE); STIER, Oliver, 12163 Berlin (DE)
(86) Internationale Anmeldenummer: PCT/EP2018/086324
(87) Internationale Veröffentlichungsnummer: WO 2019/145103

(56) Entgegenhaltungen:
- EP-A1- 2 838 096
- DE-A1- 4 133 466
- DE-C1- 19 650 752

## Beschreibung

Die Erfindung betrifft ein Verfahren zum Herstellen eines Kontaktbauteils für einen elektrischen Schalter mit einer Kontaktfläche zum Schließen eines elektrischen Kontaktes. Dabei wird das Kontaktbauteil zumindest teilweise aus einem Pulver hergestellt. Zur Herstellung von unterschiedlichen Materialzusammensetzungen kommen dabei unterschiedliche Pulverarten zum Einsatz.

Elektrische Schalter der eingangs angegebenen Pulverart sind z. B. aus der DE 41 33 466 A1 bekannt. Diese Schalter weisen Kontaktbauteile auf, wobei deren Funktion darin besteht, bei einem Schaltvorgang in gegenseitigen Kontakt zu kommen, um den elektrischen Strom zu übertragen. Die Kontaktbauteile sind in dem Schalter in einer mechanischen Anordnung zueinander positioniert, die es erlaubt, den Schaltvorgang durchzuführen. Unter anderem können derartige Schalter auch als Vakuumschaltröhren ausgeführt werden. Elektrische Schalter werden in Schaltanlagen eingebaut, die die Integration des Schalters beispielsweise in ein elektrisches Netz erlauben. Gemäß der DE 41 33 466 A1 ist beschrieben, dass Kontaktbauteile für einen Schalter mit einer Kontaktschicht beschichtet werden können. Diese kann beispielsweise aus Silber bestehen und elektrochemisch aufgebracht werden. Während des elektrochemischen Beschichtens werden überdies Graphitpartikel in die sich ausbildende Schicht eingebaut. Die Graphitpartikel werden dem für das elektrochemische Beschichten verwendeten Elektrolyt beigemischt, so dass eine Dispersion entsteht. Dies ermöglicht den Einbau der Graphitpartikel während des elektrochemischen Beschichtens.

Kontaktbauteile können auch pulvermetallurgisch hergestellt werden, wie aus der EP 2 838 096 A1 hervorgeht. Dabei können unterschiedliche Pulver verwendet werden und schichtweise zu einem Sinterkörper zusammengefügt werden. Das Sintern kann beispielsweise durch das sog. Spark Plasma Sintering (SPS) erfolgen. Durch Verwendung verschiedener Pulverarten, in denen Pulverpartikel unterschiedlicher Pulverart sind, lassen sich beispielsweise Graphitpartikel in einer Matrix aus Silber einbetten. Das Sinterverfahren erfordert die Herstellung geeigneter Werkzeuge zum Pressen des Kontaktbauteils, wobei die Sinterbehandlung zur Verdichtung der Partikel gewisse Behandlungszeiten erfordert.

Mit dem genannten Verfahren lassen sich insbesondere auch Gradientenschichten herstellen, in denen sich die Materialzusammensetzung in dem Kontaktbauteil kontinuierlich oder zumindest in kleinen Schritten ändert. Zu diesem Zweck wird das Kontaktbauteil mehrlagig aufgebaut, wobei mehrere Pulverarten mit schrittweise sich ändernden Materialzusammensetzungen vorgehalten werden müssen.

Gemäß V. I. Mali et al., Structure and Properties of Explosively Compacted Copper-Molybdenum, Combustion, Explosion, and Shockwaves, Vol. 38, No.4, pp. 473-4T1, 2002, können Kontakte auch dadurch hergestellt werden, dass ein Gemisch von Pulvern durch Sprengplattieren auf ein Substrat aufgebracht wird. Das Substrat kann beispielsweise ein Kontaktkörper sein.

Die DE 196 50 752 C1 offenbart pulvermetallurgisch hergestellte Formkörper aus Kupfer-Chrom-Kontaktwerkstoffen, die auf mindestens einer Oberfläche ein geometrisches Muster aus Bereichen mit einer feinkörnig umgewandelten Gefügestruktur aufweisen. Ferner wird ein Verfahren zu ihrer Herstellung und ihre Verwendung als Schaltkontakte in Schaltkammern von elektrischen Vakuumschaltern offenbart.

Die Aufgabe der Erfindung besteht darin, ein Verfahren zum Herstellen von Kontaktbauteilen mit Zonen unterschiedlicher Materialzusammensetzung anzugeben, welches bei einem geringen Aufwand hinsichtlich der Bevorratung von Materialien einen vergleichsweise großen Spielraum für eine Modifikation von Konzentrationsverhältnissen dieser Materialien im Kontaktbauteil gewährleistet. Außerdem ist es Aufgabe der Erfindung, ein Kontaktbauteil für eine elektrische Schaltanlage, eine Vakuumschaltröhre mit einem solchen Kontaktbauteil beziehungsweise eine Schaltanlage mit einem solchen Kontaktbauteil anzugeben, bei denen ein vergleichsweise großer Spielraum für eine lokale Modifikation der Zusammensetzung ausgeschöpft werden kann.

Diese Aufgabe wird mit dem eingangs angegebenen Verfahren zum Herstellen eines Kontaktbauteils erfindungsgemäß dadurch gelöst, dass ein pulverbettbasiertes additives Fertigungsverfahren zum Einsatz kommt, bei dem das Bauteil in einer Folge von Lagen in einem Pulverbett hergestellt wird. Erfindungsgemäß ist vorgesehen, dass zur Herstellung der Zonen unterschiedlicher Materialzusammensetzung oder einer sich kontinuierlich ändernden Materialzusammensetzung unterschiedliche Pulverarten in zumindest einem Teil der Lagen kombiniert werden. Mit anderen Worten ist vorgesehen, dass unterschiedliche Materialzusammensetzungen in den einzelnen Lagen durch unterschiedliche Kombination der zur Verfügung stehenden Pulverarten hergestellt werden. Dies kann dadurch erreicht werden, dass die Pulverarten (d. h. die Pulver unterschiedlicher Pulverarten) bei der Herstellung der Lage im Pulverbett miteinander kombiniert werden, so dass deren Mischungsverhältnis während der Herstellung des Kontaktbauteils die Materialzusammensetzung bestimmt. Dies hat den wesentlichen Vorteil, dass nur wenige unterschiedliche Pulverarten gelagert werden müssen, da es nicht notwendig ist, Pulverarten mit unterschiedlichen Mischungsverhältnissen ihrer Komponenten einzeln zu bevorraten.

Als Beispiele für das additive Fertigen können das selektive Lasersintern (auch SLS für Selective Laser Sintering), das Selektive Laserschmelzen (auch SLM für Selective Laser Melting) und das Elektronenstrahlschmelzen (auch EBM für Electron Beam Melting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise vorzugsweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Für das SLS ist charakteristisch, dass die Pulverteilchen bei diesen Verfahren nicht vollständig aufgeschmolzen werden. Demgegenüber liegt beim SLM und EBM der Energieeintrag betragsmäßig bewusst so hoch, dass die Pulverpartikel vollständig aufgeschmolzen werden.

Eine andere Möglichkeit besteht nach einer Ausgestaltung der Erfindung darin, dass die unterschiedlichen Pulverarten in zumindest einem Teil der Lagen so kombiniert werden, dass Pulver einer ersten Pulverart in einer Teilfläche der herzustellenden Lage des Pulverbettes dosiert wird, danach mindestens ein Teil des Pulvers der ersten Pulverart durch eine Energiequelle verfestigt wird, danach Pulver einer zweiten Pulverart in der selben Lage dosiert wird und zumindest ein Teil des Pulvers der zweiten Pulverart anschließend durch die Energiequelle verfestigt wird, wobei die beiden verfestigten Pulverarten (d. h. die beiden Pulver der beiden Pulverarten) gemeinsam die hergestellte Lage des Kontaktbauteils ausbilden. Hierdurch kann vorteilhaft erreicht werden, dass in dem Kontaktbauteil in der hergestellten Lage das Pulver der ersten Pulverart ohne Zumischung einer anderen Pulverart verfestigt wird. Hierdurch lässt sich gemäß einer besonderen Ausgestaltung der Erfindung in mehreren aufeinander folgenden Lagen eine Einsatzstruktur in dem Kontaktbauteil erzeugen. Diese kann die Funktionalität des Kontaktbauteils verbessern. Beispielsweise können Einsatzstrukturen derart geformt werden, dass diese den Aufbau eines Magnetfeldes während des Schaltvorgangs beeinflussen und auf diese Weise auch die Ausbreitung des sich ausbildenden Lichtbogens. Zu diesem Zweck werden in herkömmlichen Schaltkontakten, bei denen Kontaktschichten zur elektrischen Kontaktierung auf Kontaktköpfen aufgebracht werden, in diese Kontaktköpfe Schlitze eingefügt, die in dem erfindungsgemäß additiv hergestellten Kontaktbauteil mit einem Material als Einsatzstruktur zumindest teilweise ausgefüllt werden kann. Dieses Material leitet den Strom schlechter als das umgebende Material des Kontaktbauteils. Die Schlitze beziehungsweise die Einsatzstrukturen können schräg zur Ebene der Kontaktfläche verlaufen. Außerdem können die Schlitze beziehungsweise die Einsätze in der Ebene der Kontaktfläche und in Ebenen parallel zu der Kontaktfläche spiralförmig nach außen verlaufen.

Das erfindungsgemäße Verfahren kann vorteilhaft auch dazu genutzt werden, das Mischungsverhältnis zwischen dem Pulver der ersten Pulverart und dem Pulver der zweiten Pulverart in der Folge der Lagen zu verändern. Zu diesem Zweck wird das Verhältnis der durch die Dosiervorrichtung aufgebrachten Pulverarten in benachbarten Lagen verändert. Wird das Mischungsverhältnis in jeder neuen Lage verändert, so entsteht ein Konzentrationsgradient des Pulvers der ersten Pulverart in dem Pulver der zweiten Pulverart (und umgekehrt). Allerdings kann das Mischungsverhältnis mehrerer benachbarter Lagen auch beibehalten werden, so dass Konzentrationssprünge zwischen zwei Gruppen von erzeugten Pulverlagen verwirklicht werden können.

Gemäß einer besonderen Ausgestaltung der Erfindung ist vorgesehen, dass die unterschiedlichen Pulverarten dadurch kombiniert werden, dass diese durch mehrere Dosiervorrichtungen in zumindest eine der zu erzeugenden Lagen des Pulverbettes eingebracht werden. Somit kann vorteilhaft für jede Pulverart eine eigene Dosiervorrichtung vorgesehen werden, so dass ein Wechsel in den Dosiervorrichtungen nicht erforderlich ist. Um ein Mischung von Pulverarten beziehungsweise eine lokale Erzeugung von Einsatzstrukturen zu verwirklichen wird jeweils die Dosiervorrichtung angesteuert, welche die betreffende Pulverart bevorratet. Hierdurch ist vorteilhaft ein Wechsel zwischen den Pulverarten ohne zusätzliche Rüstzeiten möglich.

Eine weiterführende Ausgestaltung der Erfindung sieht vor, dass mindestens eine der Dosiervorrichtungen in einem Abstand über die Oberfläche des Pulverbettes geführt wird und das Pulver durch Rieseln dosiert wird. Hierdurch ist es möglich, das Pulver einer ersten Pulverart mittels eines Abstreifers zu dosieren, indem das Material über das Pulverbett geschoben wird. Durch Rieseln lässt sich auf diesem Material mittels der weiteren Dosiervorrichtung das Pulver einer zweiten Pulverart verteilen. Dies ist besonders von Vorteil wenn das Pulver der zweiten Pulverart nur eine geringe Konzentration aufweisen soll.

Wenn Einsatzstrukturen hergestellt werden sollen, hat die Dosierung durch Rieseln für das die Einsatzstruktur umgebende Material (Pulver der zweiten Art) zusätzlich den Vorteil, dass das Pulver der zweiten Art auch in der direkten Umgebung der Einsatzstruktur zuverlässig dosiert werden kann. Anders wäre dies bei Verwendung eines Abstreifers, da eine Dosierung von Pulver direkt hinter der Einsatzstruktur (in Bewegungsrichtung des Abstreifers gesehen) nur in einer verringerten Menge möglich ist (sogenannte Schattenbildung). Damit ergibt sich eine besondere Ausgestaltung der Erfindung dadurch, dass sowohl das Pulver der ersten Art als auch das Pulver der zweiten Art mit einer Rieselvorrichtung (Dosiervorrichtung zum Rieseln) dosiert werden.

Die Dosiervorrichtung zum Rieseln muss im letztgenannten Fall derart ausgeführt sein, dass auch eine lokale Dosierung von Pulver der ersten Pulverart und der zweiten Pulverart im Pulverbett möglich ist. Hierfür kann beispielsweise ein Dosiertrichter zur Anwendung kommen. Soll das Pulver der zweiten Pulverart über einen größeren Flächenbereich verteilt werden, so bietet sich eine schlitzförmige Dosiervorrichtung an, welche waagerecht über das Pulverbett geführt wird, während das Pulver der zweiten Pulverart aus dieser herausrieselt.

Gemäß vorteilhaften Ausgestaltungen der Erfindung können zum Mischen der Partikel in den Lagen des Pulverbettes unterschiedliche Verfahren angewendet werden. Wenn eine Dosiervorrichtung zum Rieseln zum Einsatz kommt, kann vorteilhaft beispielsweise eine lokale Dosierung nur dort erfolgen, wo die Lage des Pulverbettes zu dem Bauteil verfestigt wird. Damit wird das nicht verfestigte Pulvermaterial nur in einem geringen Maße durch die zugemischte Komponente kontaminiert, was eine Wiederverwendung erleichtert. Die Oberfläche des Pulverbettes kann nach der Dosierung durch Rieseln mittels einer Glätteinrichtung wie einem Abstreifer oder einer Walze geglättet werden, um eine homogene Verteilung des dosierten Pulvers zu fördern.

Nach der Dosierung durch Pulver einer ersten Pulverart durch Rieseln kann zwecks Herstellung einer Pulvermischung Pulver einer zweiten Pulverart durch den Abstreifer oder die Walze, auf das Pulverbett aufgetragen werden. Der Abstreifer oder die Walze arbeiten dann als weitere Dosiervorrichtung. Dabei entsteht die Pulvermischung, deren Mischungsverhältnis durch die Menge des jeweils dosierten Pulvers beeinflusst werden kann. Nach der Dosierung können die Schritte des Dosierens von Pulver der ersten Pulverart durch Rieseln und Dosierung von Pulver der zweiten Pulverart mittels Abstreifer oder Walze einmal oder mehrmals wiederholt werden. Das Mischungsverhältnis der beiden Pulverarten hängt jeweils von der zu dosierenden Menge der einzelnen Pulverarten ab. Beim Rieseln lässt sich die dosierte Pulvermenge einerseits durch den Öffnungsquerschnitt der Dosiereinrichtung und andererseits durch die Verfahrgeschwindigkeit während des Rieselns beeinflussen. Die Menge der durch die weitere Dosiereinrichtung dosierten Pulvermenge ist in erster Linie dadurch zu beeinflussen, in welcher Höhe oberhalb der Oberfläche des Pulverbettes diese geführt wird.

Die Dicke der zu erzeugenden Lagen im Pulverbett hängt nicht zuletzt von den Verfahrensparametern des angewendeten additiven Fertigungsverfahrens ab. Wenn es das Mischungsverhältnis der beiden Pulver erfordert, müssen die Dosierschritte für das Pulver der ersten Pulverart und das Pulver der zweiten Pulverart gegebenenfalls mehrmals wiederholt werden, bis die erforderliche Lagendicke zum Verfestigen durch den Energiestrahl (Laserstrahl oder Elektrodenstrahl) erreicht ist. Durch wiederholtes Dosieren können somit Zwischenlagen erzeugt werden, die gemeinsam die zu verfestigende Lage im Pulverbett bilden. Hierdurch ist vorteilhafterweise eine feinere Verteilung des Pulvers der ersten Pulverart in dem Pulver der zweiten Pulverart durch Rieseln möglich. Außerdem kann innerhalb einer zu fertigenden Lage ein linearer Konzentrationsgradient des Pulvers der ersten Pulverart in dem Pulver der zweiten Pulverart erzeugt werden.

Je nach eingebrachter Energiemenge zur Verfestigung des Pulvers und den Schmelzpunkten der unterschiedlichen Pulverarten wird bei der Herstellung des Kontaktbauteils eine Legierung aus den Pulverarten gewonnen (Variante 1), oder die Partikel des Pulvers der ersten Pulverart und der zweiten Pulverart bilden eine Dispersion. Dabei wird das Pulver der ersten Pulverart nicht aufgeschmolzen (Variante 2) und wird durch Aufschmelzen des Pulvers der zweiten Pulverart dispers in einer Matrix des durch das Pulver der zweiten Pulverart gebildeten Werkstoffs verteilt. Es gibt aber auch die Möglichkeit, dass beide Pulver aufschmelzen, aber nicht legieren (Variante 3). Dann gibt es eine Emulsion, die wieder erstarrt.

So wäre es z.B. mit Kupfer und Molybdän (bei einem genügend hohen Energieeitrag der Energiestrahls), die nicht mischbar und nicht ineinander löslich sind (Variante 3). Tatsächlich sind Cu-Mo-Mischungen für Kontakte besonders interessant, da diese eine hohe Verschleißfestigkeit mit einer guten elektrischen Leitfähigkeit verbinden. Dabei können Pulvermischungen aus der ersten und zweiten Pulverart mit 20 bis 80 vol-% Pulveranteil Molybdän verwendet werden.

Silber und Kupfer können im durch das additive Fertigungsverfahren erzeugten Schmelzprozess beispielsweise mit Chrom, Nickel, Eisen, Titan und Zink aufgeschmolzen werden, wobei unter Ausbildung von Mischkristallen Legierungen entstehen (Variante 1).

Das Pulver der ersten Pulverart kann jedoch auch aus Wolfram, Tantal, Niob, Molybdän, Rhenium, Kohlenstoff, Zinnoxid (SnO₂), Wolframcarbid (WC), Cadmiumoxid (CdO), Zinkoxid (ZnO), Eisenoxid (Fe₂O₃), Zirkoniumoxid (ZrO₂), Magnesiumoxid (MgO), Nickeloxid (NiO) oder Indiumoxid (In₂O₃) bestehen. Partikel dieser Pulverart werden durch den Energieeintrag des Energiestrahls aufgrund der hohen Schmelztemperaturen normalerweise nicht aufgeschmolzen (Variante 2). CdO schmilzt ab 1230°C. SnO2 hat den Schmelzpunkt bei 1630°C. Molybdän schmilzt bei 2620°C. Diese Temperaturen sind noch in Reichweite der Strahlschmelzverfahren wie dem SLM, so dass es je nach Leistung des Energiestrahls zum Aufschmelzen beider Pulverarten kommen kann (Variante 3). Bei beiden Varianten werden die Partikel unter Ausbildung einer Dispersion in die Matrix des umgebenden Werkstoffs aus Silber oder Kupfer eingebaut.

Wenn das Pulver der ersten Pulverart und das Pulver der zweiten Pulverart in den Lagen gemischt werden, fällt als Abfall nicht verfestigtes Pulver an, welches als Pulvermischung vorliegt. Dieser Effekt kann weitgehend verhindert werden, wenn das Pulver einer Pulverart nur lokal in dem Bereich dosiert wird, in dem eine Verfestigung des Pulverbettes stattfinden soll.

Das nicht verfestigte Pulvergemisch der ersten Pulverart und der zweiten Pulverart kann allerdings für nachfolgende Fertigungsgänge weiterer Kontaktbauteile als Pulver der ersten Art verwendet werden. Voraussetzung ist, dass das Mischungsverhältnis bekannt ist. Dieses lässt sich entweder messtechnisch bestimmen oder aus dem Pulververbrauch des entsprechenden Fertigungsganges eines Bauteils berechnen. Im folgenden Fertigungsgang kann dann das Pulver der zweiten Pulverart zugemischt werden, soweit dies zum Erreichen der geforderten Konzentration notwendig ist. Dies setzt selbstverständlich voraus, dass die Konzentration des Pulvers der zweiten Pulverart in dem als Pulver der ersten Pulverart verwendeten Pulvergemisch noch unterhalb der Konzentration liegt, welche in dem Kontaktbauteil zu erzeugen ist.

Besonders vorteilhaft ist es, wenn das Kontaktbauteil durch additives Erzeugen einer Kontaktschicht auf einem vorgefertigten Kontaktträger hergestellt wird. Dies hat den Vorteil, dass durch das additive Fertigungsverfahren nur der die Kontaktfläche bildende Teil des Kontaktbauteils additiv hergestellt werden muss. Daher kann die restliche Struktur vorteilhaft mittels herkömmlicher Fertigungsverfahren kostengünstig hergestellt werden.

Bspw. kann der Kontaktträger aus einem Kontaktplättchen bestehen, welches aus Blech gestanzt werden kann. Eine andere Möglichkeit besteht darin, das Kontaktbauteil als Kontaktschicht direkt auf einem Kontaktkopf des Kontaktbauteils herzustellen.

Es kann ein Kontaktbauteil, eine Vakuumschaltröhre mit einem solchen Kontaktbauteil oder durch eine Schaltanlage mit einer solchen Vakuumschaltröhre hergestellt werden, indem ein Kontaktbauteil nach dem oben beschriebenen Verfahren hergestellt wird. Dabei werden die bereits im Zusammenhang mit dem erfindungsgemäßen Verfahren geschilderten Vorteile für das so hergestellte Kontaktbauteil erreicht.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben. Bei den im Folgenden erläuterten Ausführungsbeispielen handelt es sich um bevorzugte Ausführungsformen der Erfindung.

Es zeigen:
- Figur 1: ein Ausführungsbeispiel des erfindungsgemäßen Verfahrens bei dem ein selektives Laserschmelzen zum Einsatz kommt, geschnitten dargestellt,
- Figur 2: ein Ausführungsbeispiel des erfindungsgemäßen Verfahrens, bei dem Pulver durch Rieseln dosiert wird, dreidimensional dargestellt,
- Figur 3: eine Vakuumschaltröhre, in der zwei Ausführungsbeispiele des Kontaktbauteils zum Einsatz kommen, geschnitten dargestellt,
- Figur 4: ein Ausführungsbeispiel für den Kontaktkopf einer Vakuumschaltröhre als anderes Ausführungsbeispiel des erfindungsgemäßen Kontaktbauteils,
- Figur 5: ein Kontaktplättchen mit einer Kontaktschicht als weiteres Ausführungsbeispiel des erfindungsgemäßen Kontaktbauteils als teilweise aufgeschnittene Seitenansicht, wobei dieses Kontaktplättchen in einer Vakuumschaltröhre gemäß Figur 3 zum Einsatz kommen kann.

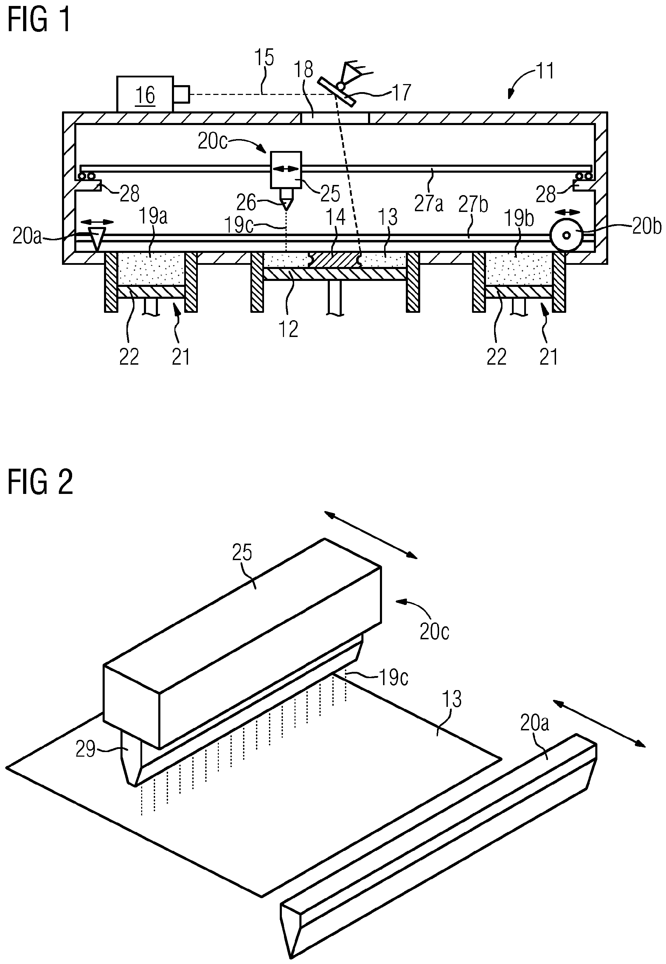

In Figur 1 ist eine Anlage zum Laserschmelzen dargestellt. Diese weist eine Prozesskammer 11 auf, in der eine absenkbare Bauplattform 12 zur Herstellung eines Pulverbetts 13 vorgesehen ist. Auf der Bauplattform 12 kann als Bauteil 14 ein mit einer Kontaktschicht 130 beschichtetes Kontaktplättchen 123 hergestellt werden, indem ein Energiestrahl 15 in Form eines Laserstrahls von einem Laser 16 erzeugt und über einen Umlenkspiegel 17 durch ein Fenster 18 in der Prozesskammer 11 auf das Bauteil 14 gerichtet wird.

Die Herstellung des Bauteils 14 erfolgt lagenweise, wobei zu diesem Zweck die Bauplattform 12 sukzessive abgesenkt werden kann. Ein Pulver 19a und ein Pulver 19b können mittels eines Abstreifers 20a, der in Richtung des dargestellten Doppelpfeils auf einer Traverse 27b waagerecht verschiebbar ist, zur lagenweisen Befüllung des Pulverbetts 13 dosiert werden. Das Pulver 19a, 19b ist zu diesem Zweck jeweils in einem Pulvervorrat 21 untergebracht, wobei ein axial verschiebbarer Dosierzylinder 22 die von dem Abstreifer 20a zu transportierende Pulvermenge vorgibt. Ein weiteres Pulver kann in einem nicht dargestellten Pulvervorrat untergebracht sein, der sich hinter der Zeichenebene befindet und durch einen nicht dargestellten Abstreifer rechtwinklig zu dem Doppelpfeil des dargestellten Abstreifers 20a dosiert werden kann.

Mittels des Abstreifers 20a kann in einer herzustellenden Lage auch beispielsweise sowohl das Pulver 19a als auch danach das Pulver 19b dosiert werden. Dabei erzeugt der Abstreifer beim axialen Verschieben während der Dosierung des Pulvers 19b eine Pulvermischung aus beiden Pulvern 19a, 19b.

Mit einer als Rieseleinrichung 20c ausgeführten Dosiervorrichtung kann ein Pulver 19c durch Rieseln auf dem Pulverbett 13 dosiert werden. Die Rieselvorrichtung 20c weist einen Vorratsbehälter 25 auf, an den ein verschließbarer Dosiertrichter 26 angeschlossen ist. Dadurch kann das Pulver 19c punktuell unterhalb des Dosiertrichters 26 auf dem Pulverbett 13 abgelegt werden. Um größere Flächenbereiche (partielle oder vollständige Fläche des Pulverbettes 13) mit dem Pulver 19c zu belegen, ist die Rieselvorrichtung 20c auf einer Traverse 27a verschiebbar gelagert, wobei die Traverse 27a ihrerseits auf Schienen 28 senkrecht zur Zeichenebene verschiebbar ist. Mittels nicht dargestellter motorischer Antriebe kann die Rieseleinrichtung 20c somit oberhalb der gesamten Fläche des Pulverbettes 13 verschoben werden.

Nach einer Dosierung des Pulvers 19c kann mittels einer Walze 20b ein Glätten der Oberfläche des Pulverbettes 13 erfolgen. Diese kann auf einer Traverse 27b verschoben werden und rollt dabei über das Pulverbett 13. soll die Walze als dosierte Einrichtung verwendet werden, so wird diese blockiert, damit ein Rollen über das Pulverbett verhindert wird. Stattdessen begleitet die Walze 20b dann wieder Abstreife 20a über das Pulverbett. Die Traverse 27b dient sowohl dem Abstreifer 20a als auch der Walze 20b als Führung, wobei ein motorischer Antrieb nicht näher dargestellt ist.

Durch aufeinander folgende Verwendung der Dosierungsvorrichtungen kann damit auf dem Pulverbett 13 eine Mischung von Pulvern erfolgen, so zum Beispiel des Pulvers 19c einer ersten Pulverart, z.B. aus Kohlenstoff, und Pulver 19a einer zweiten Pulverart, z.B. Kupfer. Stattdessen kann auch ein anderes Pulver 19b einer zweiten Pulverart, bestehend aus Silber, verwendet werden.

Gemäß Figur 2 ist dargestellt, dass die Rieselvorrichtung 20c statt mit einem Dosiertrichter 26 (vgl. Figur 1) auch mit einer Pulverzuführung 29 ausgestattet sein kann, die einen nicht näher dargestellten Dosierschlitz aufweist. Hierdurch ist es möglich, das Pulver 19c in kürzerer Zeit zu dosieren, wobei der Dosierschlitz der Breite des Pulverbettes 13, gemessen senkrecht zur durch einen Doppelpfeil angedeuteten Bewegungsrichtung der Rieselvorrichtung 20c entspricht. Weiterhin ist der Abstreifer 20a dargestellt, der ebenfalls in Richtung des angedeuteten Doppelpfeils verschoben werden kann und bei dem Ausführungsbeispiel gemäß Figur 2 zum Glätten des durch Rieseln dosierten Pulvers 19c dient.

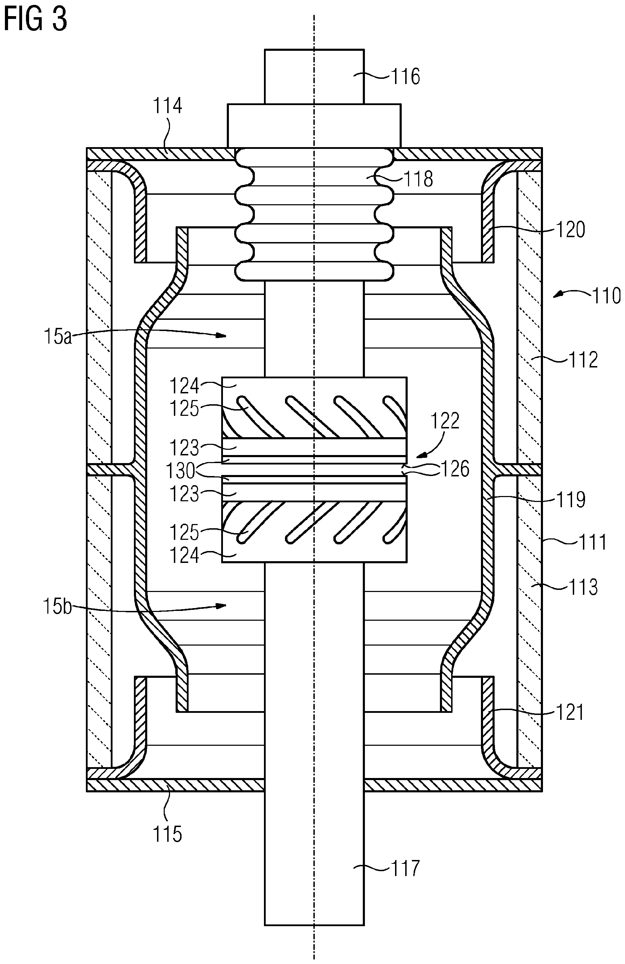

Eine Vakuumschaltröhre 110 gemäß Figur 3 weist ein evakuiertes Gehäuse 111 auf, das im Wesentlichen aus zwei koaxial zueinander angeordneten hohlzylindrischen Keramikisolatoren 112 und 113 und zwei Deckeln 114 und 115 besteht. Durch die Deckel 114, 115 sind Stromführungsbolzen 116, 117 zu einer Kontaktanordnung 122 hindurchgeführt (der Stromführungsbolzen 116 ist zwecks Durchführen des Schaltvorgangs axial beweglich ausgeführt). Teil des Gehäuses ist auch ein Faltenbalg 118, der einerseits mit dem Deckel 115 und andererseits mit dem Stromführungsbolzen 116 verlötet ist. Innerhalb des Gehäuses sind ein Hauptschirm 119 und als Abschirmelemente ein oberer Endschirm 120 und ein unterer Endschirm 121 angeordnet.

In der Vakuumschaltröhre 110 kommen zwei Kontaktbauteile 15a, 15b zum Einsatz. Das Kontaktbauteil 15b ist über den Stromführungsbolzen 117 fest mit dem Gehäuse 111 verbunden und bildet damit den Festkontakt. Das Kontaktbauteil 15a ist über den Stromführungsbolzen 116, der axial beweglich ist, als Schaltkontakt ausgeführt. Die stirnseitigen Enden der Kontaktbauteile 15a, 15b, die einander gegenüberliegen, weisen jeweils die Kontaktschicht 130 auf, die sich auf je einem Kontaktplättchen 123 befindet, welches seinerseits auf dem Stromführungsbolzen 116 beziehungsweise dem Stromführungsbolzen 117 aufgelötet ist. Hierzu stellen die Stromführungsbolzen 116, 117 jeweils einen Kontaktkopf 124 zur Verfügung, welcher mit Schlitzen 125 versehen ist.

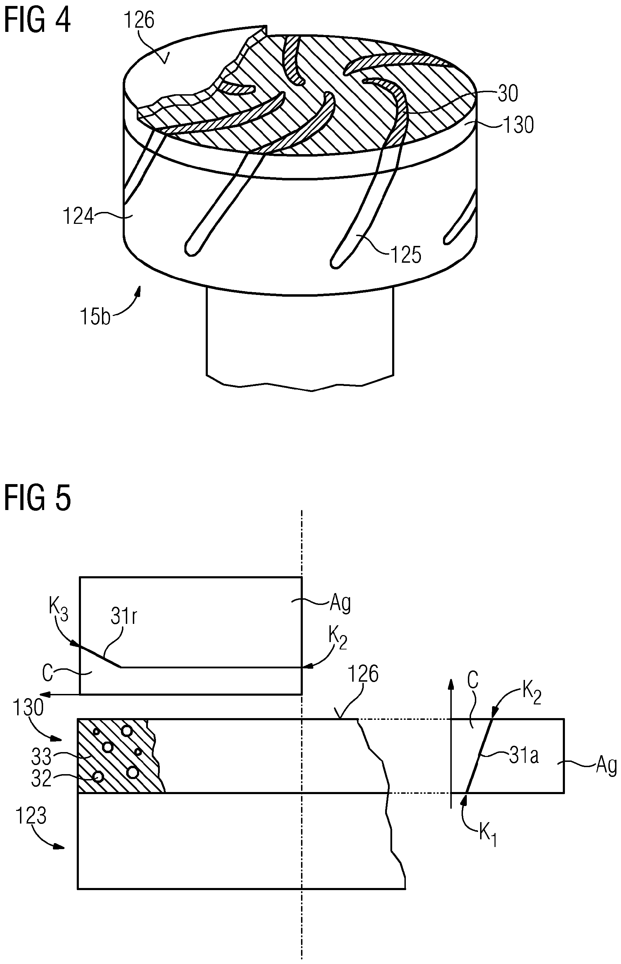

Gemäß Figur 4 ist das Kontaktbauteil 15b dargestellt, welches demjenigen gemäß Figur 3 ähnelt. Dieses unterscheidet sich von dem Kontaktbauteil 15b gemäß Figur 3 jedoch dadurch, dass die Kontaktschicht 130 nicht auf einem Kontaktplättchen (vgl. Figur 3, 123), sondern direkt auf dem Kontaktkopf 124 hergestellt ist. Außerdem weist die Kontaktschicht 130 Einsatzstrukturen 30 auf, die dem Magnetfeldaufbau während des Schaltvorganges und damit die Ausbreitung des Lichtbogens beeinflussen sollen. Die Einsatzstrukturen 30 führen dabei die Geometrie der Schlitze 125 fort, mit dem Unterschied, dass sie mit dem Material des Pulvers der ersten Pulverart ausgefüllt sind. Die Einsatzstrukturen 30 sowie in nicht dargestellter Weise die Schlitze 125 weisen in radialer Richtung einen bogenförmigen Verlauf auf.

Wie Figur 4 außerdem zu entnehmen ist, lassen sich die Einsatzstrukturen 30 nur erkennen, weil die Kontaktschicht 130 teilweise aufgeschnitten dargestellt ist. Der Schnitt liegt waagerecht in einer Ebene, in der die Einsatzstrukturen 30 in axialer Richtung des Kontaktbauteils 15 enden, das heißt, dass die folgenden Lagen, die die Kontaktfläche 126 ausbilden, ohne die Einsatzstruktur 30 hergestellt werden. Diese Lagen werden durch Mischen des Pulvers der ersten Pulverart, beispielsweise Silber, und Pulver der zweiten Pulverart, beispielsweise Kohlenstoff, und anschließendes Verfestigen der Pulvermischung erzeugt. Dabei stellt sich ein konstantes Mischungsverhältnis der beiden Pulver in diesem Bereich der Kontaktschicht 130 ein.

In Figur 5 ist dargestellt, wie in der Kontaktschicht 130 durch Mischen der ersten Pulverart und der zweiten Pulverart ein Konzentrationsgradient 31a, 31r eingestellt werden kann. Die Kontaktschicht 130 befindet sich auf einem Kontaktplättchen 123, wie dieses bei dem Vakuumschalter gemäß Figur 3 zum Einsatz kommt.

Das Pulver der ersten Pulverart besteht aus Kohlenstoff C, welches als Partikel 32 in einer Matrix 33 aus Silber Ag eingebettet ist. Die maßstäblichen Verhältnisse gemäß Figur 5 entsprechen dabei nicht der Realität. Die Matrix aus Silber wird durch Aufschmelzen des Pulvers der zweiten Pulverart erzeugt, welches aus Silber besteht.

Zu erkennen ist, dass durch Mischen der beiden Pulverarten in axialer Richtung in aufeinanderfolgenden Lagen die Konzentration an Pulver der ersten Pulverart immer weiter angehoben wird, so dass die Konzentration an Kohlenstoff von einer Konzentration K₁ an der Grenzfläche zwischen Kontaktplättchen 123 und Kontaktschicht 130 bis zu einer Konzentration K₂ an der Kontaktfläche 126 ansteigt.

Gleichzeitig ist es auch möglich, die Konzentration des Kohlenstoffs innerhalb einer Lage lokal zu verändern. Dies ist in Figur 5 auch dargestellt, wobei die Konzentration an Kohlenstoff K₂ in radialer Richtung ausgehend von der Mittelachse der Kontaktschicht 130 nach außen zunächst konstant bleibt. Im radial äußeren Bereich ergibt sich dann der Konzentrationsgradient 31r bis zum Außenrand der Kontaktschicht, wobei sich am Rand die Konzentration K₃ einstellt. Auf diese Weise kann der Konzentrationsgehalt K an Kohlenstoffpartikeln bedarfsgerecht gesteuert werden. Das Ausführungsbeispiel gemäß Figur 5 ist hier nur exemplarisch erläutert worden. Andere Konzentrationsverteilungen können bedarfsgerecht zum Einsatz kommen.

Beispielsweise weisen additiv hergestellte Kontaktschichten aus Silber mit eingelagerten Graphitpartikeln hervorragende elektrische Eigenschaften auf. Einerseits verringern die Graphitpartikel die Geschwindigkeit einer Abnutzung der Kontaktschicht. Andererseits lässt sich eine Kontaktschicht mit einer genügenden elektrischen Leitfähigkeit herstellen, die durch die eingelagerten Graphitpartikel nur in geringem Maße herabgesetzt wird.

## Patentansprüche

1. Verfahren zum Herstellen eines Kontaktbauteils (15a, 15b) für einen elektrischen Schalter mit einer Kontaktfläche (126) zum Schließen eines elektrischen Kontaktes, wobei
• das Kontaktbauteil (15a, 15b) zumindest teilweise aus Pulver hergestellt wird und
• zur Herstellung unterschiedlicher Materialzusammensetzungen in dem Kontaktbauteil (15a, 15b) unterschiedliche Pulverarten verwendet werden,
wobei ein pulverbettbasiertes additives Fertigungsverfahren zum Einsatz kommt, bei dem
• das Kontaktbauteil (15a, 15b) zumindest teilweise in einer Folge von Lagen in einem Pulverbett (13) hergestellt wird,
• zur Herstellung der unterschiedlichen Materialzusammensetzungen Pulver (19a, 19b, 19c) unterschiedlicher Pulverarten in zumindest einem Teil der Lagen kombiniert werden,
wobei die Pulver (19a, 19b, 19c) unterschiedlichen Pulverarten dadurch kombiniert werden, dass diese durch mehrere Dosiervorrichtungen (20a, 20b, 20c) in zumindest eine der zu erzeugenden Lagen des Pulverbettes (13) eingebracht werden,
**dadurch gekennzeichnet, dass**
mindestens eine der Dosiervorrichtungen als Rieselvorrichtung (20c) ausgeführt ist und in einem Abstand über die Oberfläche des Pulverbettes (13) geführt wird, wobei das Pulver (19c) einer ersten Pulverart durch Rieseln dosiert wird.

2. Verfahren nach Anspruch 1,
**dadurch gekennzeichnet,**
**dass** die Oberfläche des Pulverbettes (13) nach der Dosierung durch Rieseln mit einer weiteren Dosiervorrichtung, insbesondere einem Abstreifer (20a) oder einer Walze (20b), geglättet wird.

3. Verfahren nach Anspruch 1 oder 2,
**dadurch gekennzeichnet,**
**dass** nach der Dosierung von Pulver (19c) der ersten Pulverart Pulver (19a) einer zweiten Pulverart durch die weitere Dosiervorrichtung, insbesondere den Abstreifer (20a) oder die Walze (20b), dadurch dosiert wird, dass das Pulver (19a) der zweiten Pulverart mit dem Abstreifer (20a) oder der Walze (20b) von einem Pulvervorrat (21) auf das Pulverbett (13) verschoben wird.

4. Verfahren nach einem der voranstehenden Ansprüche,
**dadurch gekennzeichnet,**
**dass** durch mindestens eine der Dosiervorrichtungen (20a, 20b, 20c) das Pulver (19a, 19b, 19c) nur in einer Teilfläche des Pulverbettes (13) dosiert wird.

5. Verfahren nach Anspruch 4,
**dadurch gekennzeichnet,**
**dass**
• das Pulver (19c) einer ersten Pulverart in einer Teilfläche der herzustellenden Lage des Pulverbettes (13) dosiert wird,
• danach zumindest ein Teil des Pulvers (19c) der ersten Pulverart durch eine Energiequelle verfestigt wird und
• danach Pulver einer zweiten Pulverart (19a) in derselben Lage dosiert wird und
• danach zumindest ein Teil des Pulvers (19c) der zweiten Pulverart durch eine Energiequelle verfestigt wird.

6. Verfahren nach Anspruch 4 oder 5,
**dadurch gekennzeichnet,**
**dass** das Pulver (19c) der ersten Pulverart Chrom, Nickel, Wolfram, Eisen, Tantal, Niob, Molybdän, Rhenium, Titan, Zink, Kohlenstoff, SnO₂, WC, CdO, ZnO, Fe₂O₃, ZrO₂, MgO, Ni0 oder In₂O₃ enthält und das Pulver der zweiten Pulverart Silber oder Kupfer enthält.

7. Verfahren nach einem der Ansprüche 4 bis 6,
**dadurch gekennzeichnet,**
**dass** aus dem Pulver (19c) der ersten Pulverart in mehreren aufeinanderfolgenden Lagen eine Einsatzstruktur (30) erzeugt wird, die beim Verfestigen des Pulvers (19a) der zweiten Pulverart in dieses eingebettet wird.

8. Verfahren nach einem der voranstehenden Ansprüche,
**dadurch gekennzeichnet,**
**dass** aus Pulver (19c) einer ersten Pulverart und aus Pulver (19a) einer zweiten Pulverart eine Pulvermischung in der Lage des Pulverbettes (13) hergestellt wird.

9. Verfahren nach Anspruch 8,
**dadurch gekennzeichnet,**
**dass**
• das Pulver (19c) der ersten Pulverart Chrom, Nickel, Wolfram, Eisen, Tantal, Niob, Molybdän, Rhenium, Titan, Zink, Kohlenstoff, SnO₂, WC, CdO, ZnO, Fe₂O₃, ZrO₂, MgO, NiO oder In₂O₃ enthält
• und das Pulver (19a) der zweiten Pulverart Silber oder Kupfer enthält
oder eine Mischung von Partikeln aus Silber oder Kupfer und Partikeln aus einem der Materialien Chrom, Nickel, Wolfram, Eisen, Tantal, Niob, Molybdän, Rhenium, Titan, Zink, Kohlenstoff, SnO₂, WC, CdO, ZnO, Fe₂O₃, ZrO₂, MgO, NiO oder In₂O₃ enthält.

10. Verfahren nach einem der Ansprüche 8 oder 9,
**dadurch gekennzeichnet,**
**dass** das Mischungsverhältnis zwischen dem Pulver (19c) der ersten Pulverart und dem Pulver (19a) der zweiten Pulverart in der Folge der Lagen verändert wird.

11. Verfahren nach einem der voranstehenden Ansprüche, **dadurch gekennzeichnet,**
**dass** das Kontaktbauteil (15a, 15b) durch additives Erzeugen einer Kontaktschicht (130) auf einem vorgefertigten Kontaktträger (123, 124) hergestellt wird.

## Claims

1. Method for producing a contact component (15a, 15b) for an electrical switch having a contact surface (126) for closing an electrical contact, wherein
• the contact component (15a, 15b) is produced at least partially from powder, and
• different powder types are used to produce different material compositions in the contact component (15a, 15b),
wherein use is made of a powder-bed-based additive manufacturing method, in which
• the contact component (15a, 15b) is produced at least partially in a sequence of layers in a powder bed (13),
• powders (19a, 19b, 19c) of different powder types are combined in at least some of the layers to produce different material compositions,
wherein the powders (19a, 19b, 19c) of different powder types are combined in that multiple metering devices (20a, 20b, 20c) are used to introduce them into at least one of the layers to be produced of the powder bed (13),
**characterized in that**
at least one of the metering devices is in the form of a pouring device (20c) and is guided over the surface of the powder bed (13) with a spacing, wherein the powder (19c) of a first powder type is metered by pouring.

2. Method according to Claim 1,
**characterized in that**,
after the metering by pouring, the surface of the powder bed (13) is smoothed out by means of a further metering device, in particular a stripper (20a) or a roller (20b).

3. Method according to Claim 1 or 2,
**characterized in that**,
after the metering of powder (19c) of the first powder type, powder (19a) of a second powder type is metered by the further metering device, in particular the stripper (20a) or the roller (20b), **in that** the powder (19a) of the second powder type is displaced onto the powder bed (13) from a powder store (21) by the stripper (20a) or the roller (20b).

4. Method according to one of the preceding claims,
**characterized in that**
at least one of the metering devices (20a, 20b, 20c) meters the powder (19a, 19b, 19c) only into a partial area of the powder bed (13).

5. Method according to Claim 4,
**characterized in that**
• the powder (19c) of a first powder type is metered in a partial area of the layer to be produced of the powder bed (13),
• after that, at least some of the powder (19c) of the first powder type is solidified by an energy source, and
• after that, powder of a second powder type (19a) is metered in the same layer, and
• after that, at least some of the powder (19c) of the second powder type is solidified by an energy source.

6. Method according to Claim 4 or 5,
**characterized in that**
the powder (19c) of the first powder type contains chromium, nickel, tungsten, iron, tantalum, niobium, molybdenum, rhenium, titanium, zinc, carbon, SnO₂, WC, CdO, ZnO, Fe₂O₃, ZrO₂, MgO, NiO or In₂O₃, and the powder of the second powder type contains silver or copper.

7. Method according to one of Claims 4 to 6,
**characterized in that**
an insert structure (30) is created from the powder (19c) of the first powder type in multiple layers that follow one another and is embedded in the powder (19a) of the second powder type when the latter is being solidified.

8. Method according to one of the preceding claims,
**characterized in that**
a powder mixture in the layer of the powder bed (13) is produced from powder (19c) of a first powder type and from powder (19a) of a second powder type.

9. Method according to Claim 8,
**characterized in that**
• the powder (19c) of the first powder type contains chromium, nickel, tungsten, iron, tantalum, niobium, molybdenum, rhenium, titanium, zinc, carbon, SnO₂, WC, CdO, ZnO, Fe₂O₃, ZrO₂, MgO, NiO or In₂O₃
• and the powder (19a) of the second powder type contains silver or copper,
or contains a mixture of particles of silver or copper and particles of one of the following materials: chromium, nickel, tungsten, iron, tantalum, niobium, molybdenum, rhenium, titanium, zinc, carbon, SnO₂, WC, CdO, ZnO, Fe₂O₃, ZrO₂, MgO, NiO or In₂O₃.

10. Method according to either of Claims 8 and 9,
**characterized in that**
the mixing ratio of the powder (19c) of the first powder type to the powder (19a) of the second powder type is altered in the sequence of layers.

11. Method according to one of the preceding claims,
**characterized in that**
the contact component (15a, 15b) is produced by additively creating a contact layer (130) on a prefabricated contact carrier (123, 124).

## Revendications

1. Procédé de fabrication d'une pièce (15a, 15b) de contact d'un interrupteur électrique ayant une surface (126) de contact pour la fermeture d'un contact électrique, dans lequel
• on fabrique la pièce (15a, 15b) de contact au moins en partie en poudre et
• pour la production de compositions de matière différentes dans la pièce (15a, 15b) de contact, on utilise des types de poudre différents,
dans lequel on met en œuvre un procédé de fabrication additive à base d'un lit de poudre, dans lequel
• on fabrique la pièce (15a, 15b) de contact au moins en partie en une succession de couches dans un lit (13) de poudre,
• pour la production de compositions de matière différentes, on combine des poudres (19a, 19b, 19c) de types de poudre différents dans au moins une partie des couches,
dans lequel on combine les poudres (19a, 19b, 19c) de types de poudre différents en les introduisant par plusieurs dispositifs (20a, 20b, 20c) de dosage dans au moins l'une des couches à produire du lit (13) de poudre,
**caractérisé en ce qu'**
au moins l'un des dispositifs de dosage est réalisé en dispositif (20c) de ruissellement et on le fait passer à distance au-dessus de la surface du lit (13) de poudre, la poudre (19c) d'un premier type de poudre étant dosée par ruissellement.

2. Procédé suivant la revendication 1,
**caractérisé en ce qu'**
on lisse la surface du lit (13) de poudre après le dosage par ruissellement par un autre dispositif de dosage, notamment par une racle (20a) ou un par un rouleau (20b).

3. Procédé suivant la revendication 1 ou 2,
**caractérisé en ce qu'**
après le dosage de poudre (19c) du premier type de poudre, on dose un deuxième type de poudre (19a) par l'autre dispositif de dosage, notamment par la racle (20a) ou par le rouleau (20b), en déplaçant la poudre (19a) du deuxième type de poudre par la racle (20a) ou par le rouleau (20b) d'un réservoir (21) de poudre au lit (13) de poudre.

4. Procédé suivant l'une des revendications précédentes, **caractérisé en ce que**
l'on dose la poudre (19a, 19b, 19c) par au moins l'un des dispositifs (20a, 20b, 20c) de dosage seulement dans une surface partielle du lit (13) de poudre.

5. Procédé suivant la revendication 4,
**caractérisé en ce que**
• on dose la poudre (19c) d'un premier type de poudre dans une surface partielle de la couche à produire du lit (13) de poudre,
• on consolide ensuite au moins une partie de la poudre (19c) du premier type de poudre par une source d'énergie, et
• on dose ensuite de la poudre d'un deuxième type (19a) de poudre dans la même couche, et
• on consolide ensuite au moins une partie de la poudre (19c) du deuxième type de poudre par une source d'énergie.

6. Procédé suivant la revendication 4 ou 5,
**caractérisé en ce que**
la poudre (19c) du premier type de poudre contient du chrome, du nickel, du tungstène, du fer, du tantale, du niobium, du molybdène, du rhénium, du titane, du zinc, du carbone, du SnO₂, du WC, du CdO, du ZnO, du Fe₂O₃, du ZrO₂, du MgO, du NiO ou du In₂O₃ et la poudre du deuxième type de poudre contient de l'argent ou du cuivre.

7. Procédé suivant l'une des revendications 4 à 6,
**caractérisé en ce qu'**
on produit, à partir de la poudre (19c) du premier type de poudre en plusieurs couches successives, une structure (30) d'insertion qui, lors de la consolidation de la poudre (19a) du deuxième type de poudre, est incorporée dans celle-ci.

8. Procédé suivant l'une des revendications précédentes,
**caractérisé en ce qu'**
on produit, à partir de la poudre (19c) d'un premier type de poudre et à partir de la poudre (19a) d'un deuxième type de poudre, un mélange de poudres dans la couche (13) de poudre.

9. Procédé suivant la revendication 8,
**caractérisé en ce que**
• la poudre (19c) du premier type de poudre contient du chrome, du nickel, du tungstène, du fer, du tantale, du niobium, du molybdène, du rhénium, du titane, du zinc, du carbone, du SnO₂, du WC, du CdO, du ZnO, du Fe₂O₃, du ZrO₂, du MgO, du NiO ou du In₂O₃
• et la poudre (19a) du deuxième type contient de l'argent ou du cuivre
ou un mélange de particules d'argent ou de cuivre et de particules d'un autre matériau chrome, nickel, tungstène, fer, tantale, niobium, molybdène, rhénium, titane, zinc, carbone, SnO₂, WC, CdO, ZnO, Fe₂O₃, ZrO₂,MgO, NiO ou In₂O₃.

10. Procédé suivant l'une des revendications 8 ou 9,
**caractérisé en ce que**
l'on modifie le rapport de mélange entre la poudre (19c) du premier type de poudre et la poudre (19a) du deuxième type de poudre dans la succession des couches.

11. Procédé suivant l'une des revendications précédentes,
**caractérisé en ce que**
l'on fabrique la pièce (15a, 15b) de contact par production additive d'une couche (130) de contact sur un support (123, 124) de contact préfabriqué.
